# EUROPÄISCHE PATENTSCHRIFT

(11) **EP 2 140 716 B1**
(45) Veröffentlichungstag und Bekanntmachung des Hinweises auf die Patenterteilung: **07.09.2011**
(21) Anmeldenummer: 08735247.2
(22) Anmeldetag: 15.04.2008
(51) Int. Cl.: H04W 4/00

(54) **VERFAHREN ZUR SICHERSTELLUNG DER ERREICHBARKEIT VON MOBILFUNKENDGERÄTEN BEI VERWENDUNG EINES OPTIMIERTEN PAGING-MECHANISMUS**
METHOD FOR ENSURING THE ACCESSIBILITY OF MOBILE RADIO DEVICES USING AN OPTIMIZED PAGING MECHANISM
PROCÉDÉ POUR GARANTIR L'ACCESSIBILITÉ DE TÉLÉPHONES MOBILES AU MOYEN D'UN MÉCANISME OPTIMISÉ DE RECHERCHE DE PERSONNE

(30) Priorität: 23.04.2007 DE 102007019395
(43) Veröffentlichungstag der Anmeldung: 06.01.2010
(73) Patentinhaber: T-Mobile International AG, 53227 Bonn (DE)
(72) Erfinder: SPEICHER, Sebastian, 53225 Bonn (DE); NENNER, Karl-Heinz, 53332 Bornheim (DE)
(74) Vertreter: Riebling, Peter
(86) Internationale Anmeldenummer: PCT/EP2008/002984
(87) Internationale Veröffentlichungsnummer: WO 2008/128676

(56) Entgegenhaltungen:
- EP-A- 0 533 509
- WO-A-2007/033543
- US-A1- 2004 071 112

## Beschreibung

Die Erfindung betrifft ein Verfahren zur Sicherstellung der Erreichbarkeit eines im Ruhezustand befindlichen Mobilfunkendgerätes (UE) im Falle des Ausfalls der Funkübertragungseinrichtung, in dessen Versorgungsgebiet (Zelle) das UE zuletzt aktiv war und in den Ruhezustand gewechselt hat.

### Stand der Technik

Ausgangssituation: Ein Mobilfunkendgerät (UE) befindet sich in einer Funkzelle eines Mobilfunknetzes und ist für zu übertragende Daten erreichbar. Erfolgt innerhalb einer bestimmten Zeit keine Datenübertragung wird das Mobilfunkendgerät UE aufgrund von Inaktivität der Datenübertragung in einen Ruhezustand, den sogenannten Idle Mode, gebracht, in welchem eine Datenübertragung nicht mehr unmittelbar möglich ist. Die Mobilfunkendgeräte können in diesem Zustand die bevorzugte Zelle wechseln, ohne dass eine Information hierüber an das Mobilfunknetz erfolgt.

Sobald wieder Daten an das UE zu übertragen sind, muss daher zunächst netzseitig die bevorzugte Funkübertragungseinrichtung, die sogenannte "Serving Cell" für das betreffende Mobilfunkendgerät detektiert werden. Dies wird üblicherweise mittels Paging-Mechanismen realisiert. Letztere lösen in allen zu einem abgegrenzten Gebiet, der sogenannten "Paging Area", gehörenden Funkübertragungseinrichtungen ein "Radio Paging" aus. Das in der Radio-Paging-Nachricht adressierte Mobilfunkendgerät antwortet daraufhin an die Funkübertragungseinrichtung, in deren Versorgungsgebiet es sich befindet. Sobald durch diesen Mechanismus die Serving Cell festgestellt wurde, können die zu übertragenden Daten an das Mobilfunkendgerät zugestellt werden.

In der älteren, nicht vorveröffentlichten Patentanmeldung DE 10 2006 006 485 sind optimierte Paging-Mechanismen offenbart, die zunächst versuchen, das Mobilfunkendgerät UE nur über die Funkübertragungseinrichtung zu erreichen, innerhalb deren Versorgungsgebiets das UE in den Ruhezustand gewechselt hat. Nachfolgend wird diese Funkübertragungseinrichtung "letzte bekannte Funkübertragungseinrichtung" genannt. Falls sich das UE tatsächlich noch in diesem Gebiet befindet, das von der "letzen bekannten Funkübertragungseinrichtung" mit Funksignalen versorgt wird, wird damit ein überflüssiges Radio Paging innerhalb der restlichen Paging Area vermieden, wodurch sich eine Optimierung ergibt.

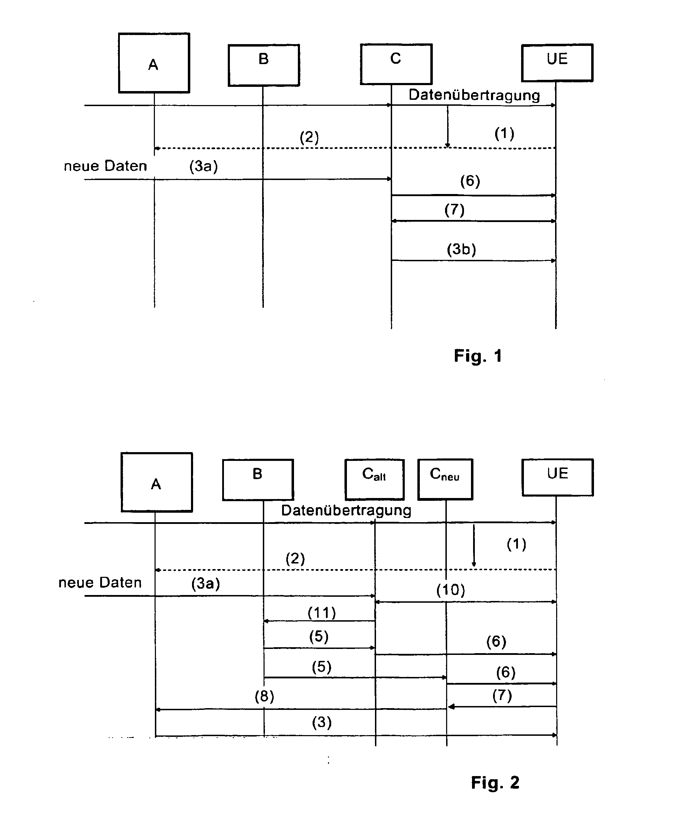

Zu diesem Zweck wird üblicherweise, wie in Figur 1 dargestellt, innerhalb einer Datenübertragungseinrichtung A für jedes Mobilfunkendgerät UE die letzte bekannte Funkübertragungseinrichtung C gespeichert (Figur 1, Schritte (1) und (2)). Auf dieser Basis werden für UEs ankommende Daten durch eine Mobilitätssteuereinrichtung B direkt an die dem jeweiligen UE zugeordnete letzte bekannte Funkübertragungseinrichtung C weitergeleitet (3a).

Die Funkübertragungseinrichtung C initiiert ein Funkpaging "Radio Paging", (6). Das Endgerät UE antwortet (7). Falls sich das UE tatsächlich noch im Versorgungsgebiet dieser Funkübertragungseinrichtung befindet, stellt letztere die Daten direkt zu (3b).

Falls andernfalls das UE nicht über die letzte bekannte Funkübertragungseinrichtung per Radio Paging erreicht werden kann (Figur 2), löst die letzte bekannte Funkübertragungseinrichtung "C" innerhalb der Mobilitätssteuerungseinrichtung B ein Paging innerhalb der gesamten Paging Area aus. Sobald durch diesen Mechanismus die aktuelle Serving Cell (in Figur 2 Funkübertragungseinrichtung "Cₙₑᵤ") festgestellt wurde, ist das UE wieder erreichbar und die zu übertragenden Daten können an das UE zugestellt werden.

Bei diesem Verfahren kann folgendes Problem auftreten: Falls eine Funkübertragungseinrichtung (z.B. Funkübertragungseinrichtung C in Figur 1) ausfällt, wären alle UEs, die innerhalb des Versorgungsgebiets der Funkübertragungseinrichtung C in den Ruhezustand gewechselt haben, d.h., für die Funkübertragungseinrichtung C dle letzte bekannte Funkübertragungseinrichtung ist, für weitere Datenübertragungen nicht mehr erreichbar - selbst wenn sich die UEs mittlerweile im Versorgungsgebiet einer anderen (nicht ausgefallenen) Funkübertragungseinrichtung befinden würden. Diese Problematik ergibt sich daraus, dass die Datenübertragungseinrichtung A Daten für UEs, für welche die Funkübertragungseinrichtung C die letzte bekannte Funkübertragungseinrichtung ist, auch im Falle des Ausfalls von C weiterhin an Funkübertragungseinrichtung C weiterleitet.

Die US 2004/0071112 A1 offenbart ein Handoff-Verfahren für ein in einem Ruhezustand befindliches Mobilfunkendgerät eines zellularen Mobilkommunikationssystems, wobei das Mobilfunkendgerät in einer ersten Funkzelle des Mobilkommunikationssystems, die von einer Funkübertragungseinrichtung mit Funksignalen versorgt wird, betrieben wird, und in einer Datenübertragungseinrichtung des Mobilkommunikationssystems Daten anstehen, die an das Mobilfunkendgerät zu übermitteln sind, wobei ein Pagingverfahren angewendet wird, um die Erreichbarkeit des Mobilfunkendgeräts, für die diese Funkübertragungseinrichtung die letzte bekannte Funkübertragungseinrichtung ist, wiederherzustellen.

### Offenbarung der Erfindung

Es ist die Aufgabe der Erfindung, die oben beschriebenen Pagingverfahren zu verbessern und sicherer zu gestalten, so dass das Mobilkommunikationssystem ein wegen eines Ausfalls einer Funkübertragungseinrichtung fehlgeschlagenes Paging auf der Netzwerkseite erkennen kann und danach die Verbindung zu einem Mobilfunkendgerät wieder herstellen kann, um im Netz anstehende Daten zum Mobilfunkendgerät übertragen zu können.

Diese Aufgabe wird erfindungsgemäß durch ein Verfahren gemäß dem Anspruch 1 gelöst.

Bevorzugte Ausgestaltungen der Erfindung sowie weitere vorteilhafte Merkmale der Erfindung sind in den Unteransprüchen angegeben.

Die erfindungsgemäße Lösung besteht im Wesentlichen aus zwei Schritten:
1) Erkennung des Ausfalls einer Funkübertragungseinrichtung
2) Behandlung des Ausfalls dieser Funkübertragungseinrichtung mit der Zielsetzung, die Erreichbarkeit der Mobilfunkendgeräte UEs, für die diese Funkübertragungseinrichtung die letzte bekannte Funkübertragungseinrichtung ist, wiederherzustellen.

Im Folgenden werden bevorzugte Ausgestaltungen dieser die Details dieser Verfahrensschritte beschrieben.

Die Erkennung des Ausfalls der Funkübertragungseinrichtung, gemäß Schritt a) kann auf verschiedene Arten realisiert werden:
1a) Durch eine Überwachung der Verbindungen zwischen der/den Datenübertragungseinrichtung(en) A und den Funkübertragungseinrichtungen C, sowie
1b) durch eine Überwachung der Verbindungen zwischen der/den Mobilitätssteuerungseinrichtung(en) B und den Funkübertragungseinrichtungen C.

Eine Behandlung des Ausfalls der Funkübertragungseinrichtung, gemäß Schritt B), kann folgendes umfassen:

Nachdem der Ausfall einer Funkübertragungseinrichtung C festgestellt wurde, kann die Erreichbarkeit möglichst vieler UEs, für die Funkübertragungseinrichtung C die letzte bekannte Funkübertragungseinrichtung ist, mit einer der folgenden Varianten realisiert werden:
2a) Alle UEs, für die Funkübertragungseinrichtung C die letzte bekannte Funkübertragungseinrichtung ist, werden über alle verbleibenden Funkübertragungseinrichtungen der gesamten Paging Area mittels Radio Paging adressiert. Ein UE, das sich im Versorgungsgebiet einer anderen Funkübertragungseinrichtung innerhalb der Paging Area befindet und die Radio-Paging-Nachricht empfängt, antwortet auf diese Nachricht an die Funkübertragungseinrichtung in deren Versorgungsgebiet es sich befindet. Daraufhin teilt die Funkübertragungseinrichtung den aktuellen Standort der zuständigen Datenübertragungseinrichtung mit, woraufhin die Datenübertragungseinrichtung für das betreffende UE den neuen Standort verwendet und somit das UE wieder erreichen kann.
2b) Für jedes UE, für das die Funkübertragungseinrichtung C die letzte bekannte Funkübertragungseinrichtung ist, wird innerhalb der Datenübertragungseinrichtung eine andere Funkübertragungseinrichtung derselben Paging Area als letzte bekannte

Funkübertragungseinrichtung zugeteilt. Die Art der Zuteilung anderer Funkübertragungseinrichtungen kann zufällig als auch nach einem bestimmten Muster (z.B. Zuteilung der Funkübertragungseinrichtungen, die die direkt geographisch umliegenden Gebiete der ausgefallenen Funkübertragungseinrichtung versorgen) geschehen.

Nachdem die Zuteilung abgeschlossen ist, ist sichergestellt, dass jedes UE, das sich nicht im ausschließlichen Versorgungsbereich der ausgefallenen Funkübertragungseinrichtung befindet, wieder erreicht werden kann. Dies begründet sich wie folgt: Im Falle des Eintreffens von Daten für ein UE können zwei Fälle auftreten: Entweder befindet sich das UE tatsächlich im Versorgungsbereich der zufällig oder nach einem bestimmten Muster zugeteilten letzten bekannten Funkübertragungseinrichtung. In diesem Fall können wie in Figur 1 dargestellt, die Daten direkt zugestellt werden. Andernfalls (das UE befindet sich nicht im Versorgungsbereich der als letzten bekannten Funkübertragungseinrichtung zugeteilten Funkübertragungseinrichtung) wird, wie in Figur 2 dargestellt, ein Radio Paging innerhalb des gesamten Paging Area ausgelöst (siehe oben). Damit ist sichergestellt, dass alle UEs, die sich nicht im ausschließlichen Versorgungsbereich der ausgefallenen Funkübertragungseinrichtung befinden, wieder erreicht werden können.

Weitere Ausgestaltungen der Erfindung:

Im Schritt 2a) kann das Paging aller UEs der ausgefallenen Funkübertragungseinrichtung C auf drei verschiedene Arten realisiert werden: (1) unmittelbar für alle UEs in einem zusammenhängenden Zeitraum oder (2) über einen längeren Zeitraum verteilt (z.B. mehrere Minuten) oder (3) für ein bestimmtes UE erst wenn für das betreffende UE wieder Daten zuzustellen sind

Im Fall (3) ist dabei folgendes zu beachten: Falls die Datenübertragungseinrichtung und die Mobilitätssteuerungseinrichtung physikalisch getrennt sind, ist sicherzustellen, dass die Mobilitätssteuerungseinrichtung das Eintreffen neuer Daten bemerkt. Dies kann auf verschiedene Arten realisiert werden: (a) die Datenübertragungseinrichtung kann die Mobilitätssteuerungseinrichtung über das Eintreffen neuer Daten informieren oder (b) die Mobilitätssteuerungseinrichtung übernimmt bis zum Wiederauffinden des UEs die Datenverbindung(en) von der ausgefallenen Funkübertragungseinrichtung.

Im Schritt 2a können nach dem Paging aller UEs der ausgefallenen Funkübertragungseinrichtung C die UEs, die sich vor dem Ausfall im Ruhezustand befanden, wieder in den Ruhezustand versetzt werden.

Während der Durchführung von Schritt 2 ("Behandlung des Ausfalls der Funkübertragungseinrichtung ...") können bis zum Auffinden der einzelnen UEs Daten für diese UEs gepuffert werden, so dass der Datenverlust durch den Ausfall der Funkübertragungseinrichtung minimiert wird.

Die Erfindung wird nachfolgend anhand von Zeichnungen näher erläutert. Hierbei ergeben sich weitere Merkmale und Vorteile der Erfindung.
Figur 1 zeigt schematisch die Signalisierung bei einem Pagingverfahren unter Verwendung einer letzten bekannten Funkübertragungseinrichtung.
Figur 2 zeigt schematisch die Signalisierung gemäß einem erfindungsgemäßen Pagingverfahren.
Figur 1 wurde im einleitenden Teil der Beschreibung bereits abgehandelt.
Figur 2 zeigt die erfindungsgemäß, optimierte Lösung für den Fall, dass die letzte bekannte Funkübertragungseinrichtung Cₐₗₜ ausfällt oder gestört ist.

Nachdem der Ausfall einer Funkübertragungseinrichtung C festgestellt wurde, sei es durch eine Überwachung der Verbindungen zwischen der/den Datenübertragungseinrichtung(en) A und den Funkübertragungseinrichtungen C, oder durch eine Überwachung der Verbindungen zwischen der/den Mobilitätssteuerungseinrichtung(en) B und den Funkübertragungseinrichtungen C, kann die Erreichbarkeit möglichst vieler UEs, für die Funkübertragungseinrichtung C die letzte bekannte Funkübertragungseinrichtung ist, wieder hergestellt werden.

Die Datenübertragungseinrichtung A versucht, für das UE eintreffende neue Daten über die letzte bekannte Funkübertragungseinrichtung Cₐₗₜ an das Endgerät UE zu senden. Die letzte bekannte Funkübertragungseinrichtung Cₐₗₜ ist ausgefallen, so dass eine Kontaktaufnahme scheitert. (3a). Aufgrund des Ausfalls der Funkübertragungseinrichtung Cₐₗₜ wird nun ein Paging im Pagingareal "Area Paging Request" an alle zu einem Pagingareal zugehörigen Funkzellen angestoßen (11). Die Mobilitätssteuereinrichtung B übermittelt eine Pagingnachricht: "Cell Paging Request", an alle zum Pagingareal gehörenden Funkübertragungseinrichtungen (5), z.B. Cₙₑᵤ. Die Funkübertragungseinrichtungen, z.B. Cₙₑᵤ, initiieren ein Funkpaging "Radio Paging", das von allen in ihrer jeweiligen Reichweite befindlichen Endgeräten UE empfangen werden kann, (6). Das im Funkpaging "Radio Paging" adressierte Endgerät UE, das sich im Bereich der "neuen" Funkübertragungseinrichtung Cₙₑᵤ aufhält, meldet sich bei derjenigen "neuen" Funkübertragungseinrichtung Cₙₑᵤ, die aktuell der versorgenden Funkzelle "Serving Cell" entspricht. Es erfolgt eine Funkressourcenzuweisung an das Endgerät, (7), wobei die Funkübertragungseinrichtung Cₙₑᵤ der Datenübertragungseinrichtung A den Standort der Endgerätes UE mitteilt, (8). Jetzt können neue Daten von der Datenübertragungseinrichtung A über die "neue" Funkübertragungseinrichtung zum Endgerät UE übertragen werden, (9).

Alternativ kann für jedes UE, für das die Funkübertragungseinrichtung Cₐₗₜ die letzte bekannte Funkübertragungseinrichtung ist, innerhalb der Datenübertragungseinrichtung A eine andere Funkübertragungseinrichtung Cₙₑᵤ in demselben Pagingareal als letzte bekannte Funkübertragungseinrichtung zugeteilt werden. Die Art der Zuteilung anderer Funkübertragungseinrichtungen, z.B. Cₙₑᵤ, kann zufällig als auch nach einem bestimmten Muster (z.B. Zuteilung der Funkübertragungseinrichtungen, die die direkt geographisch umliegenden Gebiete der ausgefallenen Funkübertragungseinrichtung versorgen) geschehen. Nachdem die Zuteilung der neuen Funkübertragungseinrichtung Cₙₑᵤ abgeschlossen ist, ist sichergestellt, dass jedes UE, das sich nicht im ausschließlichen Versorgungsbereich der ausgefallenen Funkübertragungseinrichtung Cₐₗₜ befindet, wieder erreicht werden kann. Dies begründet sich wie folgt: Im Falle des Eintreffens von Daten für ein UE können zwei Fälle auftreten: Entweder befindet sich das UE tatsächlich im Versorgungsbereich der zufällig oder nach einem bestimmten Muster zugeteilten letzten bekannten Funkübertragungseinrichtung Cₙₑᵤ. In diesem Fall können wie in Figur 1 dargestellt, die Daten direkt zugestellt werden. Andernfalls (das UE befindet sich nicht im Versorgungsbereich der als letzten bekannten Funkübertragungseinrichtung zugeteilten Funkübertragungseinrichtung Cₙₑᵤ) wird, wie in Figur 2 dargestellt, ein Radio Paging innerhalb des gesamten Pagingareals ausgelöst (siehe oben). Damit ist sichergestellt, dass alle UEs, die sich nicht im ausschließlichen Versorgungsbereich der ausgefallenen Funkübertragungseinrichtung befinden, wieder erreicht werden können.
- A: Datenübertragungseinrichtung
- B: Mobilitätssteuereinrichtung
- C: Funkübertragungseinrichtung
- Cₐₗₜ: bisher verwendete letzte bekannte Funkübertragungseinrichtung
- Cₙₑᵤ: neu zugeteilte Funkübertragungseinrichtung (bei Ausfall/Störung von Cₐₗₜ)
- UE: Endgerät (User Equipment)

In den Zeichnungen dargestellt Verfahrensschritte
(1) Endgerät UE geht in den Ruhezustand
(2) Signalisierung des Ruhezustands an die Netzkomponenten C, B, A
(3) Übermitteln von neuen Daten für UE an A
   (3a) Übermitteln von neuen Daten für UE direkt an C
   (3b) Übermitteln von neuen Daten von C an UE
(4) Paginganfrage im Pagingareal von A an B mittels Pagingnachricht: "Area Paging Request"
(5) Paginganfrage von B an ein oder mehrere C in den Funkzellen des Pagingareals mittels Pagingnachricht: "Cell Paging Request"
(6) Funkpaging von C an UE mittels Pagingnachricht: "Radio Paging"
(7) Funkressourcenzuweisung C<->UE mittels einer "Resouce Assignment" Prozedur
(8) Übermittlung des Standortes des UE von C an B und A mittels Pagingnachricht: "Cell Paging Response"
(9) Übermittlung der neuen Daten von A an UE
(10) Paging des UE durch Cₐₗₜ fehlgeschlagen
(11) Paginganfrage im Pagingareal von Cₐₗₜ an B mittels Pagingnachricht: "Area Paging Request"

## Patentansprüche

1. Verfahren zur Durchführung eines Pagings in einem zellularen Mobilkommunikationssystem, wobei in einer ersten Funkzelle des Mobilkommunikationssystems, die von einer Funkübertragungseinrichtung (C; Cₐₗₜ) mit Funksignalen versorgt wird, ein Mobilfunkendgerät (UE) betrieben wird, das sich in einem Ruhezustand befindet, und in einer Datenübertragungseinrichtung (A) des Mobilkommunikationssystems Daten anstehen, die an das Mobilfunkendgerät (UE) zu übermitteln sind, wobei bei einer Erkennung eines Ausfalls oder einer Störung der Funkübertragungseinrichtung (Cₐₗₜ) Maßnahmen zur Behandlung des Ausfalls/Störung dieser Funkübertragungseinrichtung (Cₐₗₜ) getroffen werden mit der Zielsetzung, die Erreichbarkeit des Mobilfunkendgeräts (UE), für die diese Funkübertragungseinrichtung (Cₐₗₜ) die letzte bekannte Funkübertragungseinrichtung ist, wiederherzustellen, indem das Mobilfunkendgerät (UE) über alle verbleibenden Funkübertragungseinrichtungen (Cₙₑᵤ) eines Pagingareals mittels Radio Paging adressiert wird, oder dem Mobilfunkendgerät (UE) innerhalb der Datenübertragungseinrichtung (A) eine andere Funkübertragungseinrichtung (Cₙₑᵤ) desselben Pagingareals als letzte bekannte Funkübertragungseinrichtung zugeteilt wird.

2. Verfahren nach Anspruch 1, **dadurch gekennzeichnet, dass** die Erkennung des Ausfalls der Funkübertragungselnrichtung (Cₐₗₜ) durch eine Überwachung der Verbindungen zwischen der Datenübertragungseinrichtung (A) und der Funkübertragungseinrichtung (Cₐₗₜ) erfolgt.

3. Verfahren nach Anspruch 1, **dadurch gekennzeichnet, dass** die Erkennung des Ausfalls der Funkübertragungseinrichtung (Cₐₗₜ) durch eine Überwachung der Verbindungen zwischen einer Mobilitätssteuerungseinrichtung (B) und der Funkübertragungseinrichtung (Cₐₗₜ).

4. Verfahren nach einem der Ansprüche 1 bis 3, **dadurch gekennzeichnet, dass** in Falle, dass das Mobilfunkendgerät (UE), für das die Funkübertragungseinrichtung (Cₐₗₜ) die letzte bekannte Funkübertragungseinrichtung ist, über alle verbleibenden Funkübertragungseinrichtungen (Cₙₑᵤ) eines Pagingareals mittels Radio Paging adressiert wird, das Mobilfunkendgerät (UE), das sich im Versorgungsgebiet einer anderen Funkübertragungseinrichtung (Cₙₑᵤ) innerhalb des Pagingareals befindet und die Radio-Paging-Nachricht empfängt, auf diese Nachricht an die Funkübertragungseinrichtung (Cₙₑᵤ) in deren Versorgungsgebiet es sich befindet, antwortet, wonach die Funkübertragungseinrichtung (Cₙₑᵤ) der zuständigen Datenübertragungseinrichtung (A) den aktuellen Standort des Mobilfunkendgeräts (UE) mitteilt, woraufhin die Datenübertragungseinrichtung (A) für das betreffende Mobilfunkendgerät (UE) den neuen Standort verwendet und die Daten zustellen kann.

5. Verfahren nach einem der Ansprüche 1 bis 3, **dadurch gekennzeichnet, dass** im Falle, dass dem Mobilfunkendgerät (UE), für das die Funkübertragungseinrichtung (Cₐₗₜ) die letzte bekannte Funkübertragungseinrichtung ist, innerhalb der Datenübertragungseinrichtung (A) eine andere Funkübertragungseinrichtung (Cₙₑᵤ) desselben Pagingareals als letzte bekannte Funkübertragungseinrichtung zugeteilt wird, nach dem Anschluss der Zuteilung sichergestellt ist, dass das Mobilfunkendgerät (UE), das sich nicht im ausschileßilchen Versorgungsbereich der ausgefallenen Funkübertragungseinrichtung (Cₐₗₜ) befindet, wieder erreichbar ist.

6. Verfahren nach einem der Ansprüche 1 bis 5, **dadurch gekennzeichnet, dass** das Paging des Mobilfunkendgeräts (UE) der ausgefallenen Funkübertragungseinrichtung (Cₐₗₜ) auf drei verschiedene Arten realisiert werden kann: (1) unmittelbar für alle Mobilfunkendgeräte (UEs) in einem zusammenhängenden Zeitraum oder (2) über einen längeren Zeitraum verteilt oder (3) für ein bestimmtes Mobilfunkendgerät (UE) erst wenn für das betreffende Mobilfunkendgerät (UE) wieder Daten zuzustellen sind.

7. Verfahren nach einem der Ansprüche 1 bis 6, **dadurch gekennzeichnet, dass** im Falle die Datenübertragungseinrichtung (A) und die Mobilitätssteuerungseinrichtung (B) physikalisch getrennt sind, das Eintreffen neuer Daten für das Mobilfunkendgerät (UE) durch die Mobilitätssteuerungseinrichtung detektiert wird durch: (a) die Datenübertragungseinrichtung (A) kann die Mobilitätssteuerungseinrichtung (B) über das Eintreffen neuer Daten informieren oder (b) die Mobilitätssteuerungseinrichtung (B) übernimmt bis zum Wiederauffinden des Mobilfunkendgeräts (UE) die Datenverbindung von der ausgefallenen Funkübertragungseinrichtung (Cₐₗₜ).

8. Verfahren nach einem der Ansprüche 1 bis 7, **dadurch gekennzeichnet, dass** nach dem Paging des Mobilfunkendgeräts (UE) der ausgefallenen Funkübertragungseinrichtung (Cₐₗₜ) das Mobilfunkendgerät (UE), das sich vor dem Ausfall Im Ruhezustand befand, wieder in den Ruhezustand versetzt wird.

9. Verfahren nach einem der Ansprüche 1 bis 8, **dadurch gekennzeichnet, dass** während der Behandlung des Ausfalls der Funkübertragungseinrichtung (Cₐₗₜ) die bis zum Auffinden des Mobilfunkendgeräts (UE) für das Mobilfunkendgerät (UE) bestimmte Daten gepuffert werden, so dass der Datenverlust durch den Ausfall der Funkübertragungseinrichtung minimiert wird.

## Claims

1. Method for carrying out paging in a cellular mobile communications system, wherein in a first radio cell of the mobile communications system which is supplied with radio signals by a radio transmission device (C; Cₐₗₜ), a mobile telephone terminal (UE) which is in an idle state is operated, and in a data transmission device (A) of the mobile communications system there are data which are to be forwarded to the mobile telephone terminal (UE), wherein, on detection of a failure or disruption of the radio transmission device (Cₐₗₜ), measures for dealing with the failure/disruption of this radio transmission device (Cₐₗₜ) are taken with the aim of restoring the accessibility of the mobile telephone terminal (UE) for which this radio transmission device (Cₐₗₜ) is the last known radio transmission device, by addressing the mobile telephone terminal (UE) via all of the remaining radio transmission devices (Cₙₑᵤ) of a paging area by radio paging, or allocating another radio transmission device (Cₙₑᵤ) of the same paging area to the mobile telephone terminal (UE) within the data transmission device (A) as the last known radio transmission device.

2. Method according to claim 1, **characterised in that** detection of failure of the radio transmission device (Cₐₗₜ) is effected by monitoring of the connections between the data transmission device (A) and the radio transmission device (Cₐₗₜ) -

3. Method according to claim 1, **characterised in that** detection of failure of the radio transmission device (Cₐₗₜ) is effected by monitoring of the connections between a mobility control device (B) and the radio transmission device (Cₐₗₜ).

4. Method according to one of claims 1 to 3, **characterised in that**, in the event that the mobile telephone terminal (UE) for which the radio transmission device (Cₐₗₜ) is the last known radio transmission device is addressed by radio paging via all of the remaining radio transmission devices (Cₙₑᵤ) of a paging area, the mobile telephone terminal (UE) which is located in the supply area of another radio transmission device (Cₙₑᵤ) within the paging area and receives the radio paging message answers this message to the radio transmission device (Cₙₑᵤ) in the supply area of which it is located, after which the radio transmission device (Cₙₑᵤ) of the data transmission device (A) responsible conveys the current location of the mobile telephone terminal (UE), whereupon the data transmission device (A) uses the new location for the mobile telephone terminal (UE) concerned and can deliver the data.

5. Method according to one of claims 1 to 3, **characterised in that**, in the event that the mobile telephone terminal (UE) for which the radio transmission device (Cₐₗₜ) is the last known radio transmission device is allocated another radio transmission device (Cₙₑᵤ) of the same paging area as the last known radio transmission device within the data transmission device (A), after connection of the allocation it is ensured that the mobile telephone terminal (UE) which is not located in the exclusive supply area of the failed radio transmission device (Cₐₗₜ) is accessible again.

6. Method according to one of claims 1 to 5, **characterised in that** paging of the mobile telephone terminal (UE) of the failed radio transmission device (Cₐₗₜ) can be carried out in three different ways: (1) immediately for all mobile telephone terminals (UEs) in a continuous period of time or (2) distributed over a longer period of time or (3) for a particular mobile telephone terminal (UE) not until data can be delivered again for the mobile telephone terminal (UE) concerned.

7. Method according to one of claims 1 to 6, **characterised in that**, in the event that the data transmission device (A) and the mobility control device (B) are physically separate, the arrival of new data for the mobile telephone terminal (UE) is detected by the mobility control device by: (a) the data transmission device (A) can inform the mobility control device (B) of the arrival of new data or (b) the mobility control device (B) takes over the data connection from the failed radio transmission device (Cₐₗₜ) until the mobile telephone terminal (UE) is located again.

8. Method according to one of claims 1 to 7, **characterised in that**, after paging of the mobile telephone terminal (UE) of the failed radio transmission device (Cₐₗₜ), the mobile telephone terminal (UE) which was in an idle state before the failure is returned to the idle state.

9. Method according to one of claims 1 to 8, **characterised in that**, while the failure of the radio transmission device (Cₐₗₜ) is being dealt with, the data intended for the mobile telephone terminal (UE) are buffered until the mobile telephone terminal (UE) is located, so that the data loss due to failure of the radio transmission device is minimised.

## Revendications

1. Procédé pour la réalisation d'un avertissement par radiomessagerie dans un système de communication mobile cellulaire, étant précisé que dans une première cellule du système de communication mobile qui est alimentée en signaux radio par un dispositif de transmission radio (C ; Cₐₗₜ) fonctionne un téléphone mobile (UE) qui se trouve dans un état de repos, et dans un dispositif de transmission de données (A) du système de communication mobile se trouvent des données qui doivent être transmises au téléphone mobile (UE), et que lors d'une détection de panne ou d'incident dans le dispositif de transmission radio (Cₐₗₜ) des mesures sont prises pour traiter la défaillance/l'incident dudit dispositif de transmission radio (Cₐₗₜ) afin de rétablir l'accessibilité du téléphone mobile (UE) pour lequel ce dispositif de transmission radio (Cₐₗₜ) est le dernier dispositif de transmission radio connu, grâce au fait que le téléphone mobile (UE) est adressé par radiomessagerie par l'intermédiaire de tous les dispositifs de transmission radio (Cₙₑᵤ) restants d'une zone de radiomessagerie, ou qu'un autre dispositif de transmission radio (Cₙₑᵤ) de la même zone de radiomessagerie est affecté comme dernier dispositif de transmission radio connu au téléphone mobile (UE) à l'intérieur du dispositif de transmission de données (A).

2. Procédé selon la revendication 1, **caractérisé en ce que** la détection de la panne du dispositif de transmission radio (Cₐₗₜ) se fait grâce à une surveillance des liaisons entre le dispositif de transmission de données (A) et le dispositif de transmission radio (Cₐₗₜ).

3. Procédé selon la revendication 1, **caractérisé en ce que** la détection de la panne du dispositif de transmission radio (Cₐₗₜ) se fait grâce à une surveillance des liaisons entre un dispositif de commande de mobilité (B) et le dispositif de transmission radio (Cₐₗₜ).

4. Procédé selon l'une des revendications 1 à 3, **caractérisé en ce que** dans le cas où le téléphone mobile (UE) pour lequel le dispositif de transmission radio (Cₐₗₜ) est le dernier dispositif de transmission radio connu est adressé par radiomessagerie par l'intermédiaire de tous les dispositifs de transmission radio (Cₙₑᵤ) restants d'une zone de radiomessagerie, le téléphone mobile (UE) qui se trouve dans la zone de couverture d'un autre dispositif de transmission radio (Cₙₑᵤ) à l'intérieur de la zone de radiomessagerie et qui reçoit le message de radiomessagerie répond à ce message, au dispositif de transmission radio (Cₙₑᵤ) dans la zone de couverture duquel il se trouve, après quoi le dispositif de transmission radio (Cₙₑᵤ) du dispositif de transmission de données (A) compétent communique la position actuelle du téléphone mobile (UE), moyennant quoi le dispositif de transmission de données (A) utilise pour le téléphone mobile (UE) concerné la nouvelle position et peut transmettre les données.

5. Procédé selon l'une des revendications 1 à 3, **caractérisé en ce que** dans le cas où un autre dispositif de transmission radio (Cₙₑᵤ) de la même zone de radiomessagerie est affecté comme dernier dispositif de transmission radio connu au téléphone mobile (UE) pour lequel le dispositif de transmission radio (Cₐₗₜ) est le dernier dispositif de transmission connu, on affecte à l'intérieur du dispositif de transmission de données (A) un autre dispositif de transmission radio (Cₙₑᵤ) de la même zone de radiomessagerie comme dernier dispositif de transmission radio connu, et on s'assure après la connexion de l'affectation que le téléphone mobile (UE) qui ne se trouve pas dans la zone de couverture exclusive du dispositif de transmission radio (Cₐₗₜ) tombé en panne soit à nouveau accessible.

6. Procédé selon l'une des revendications 1 à 5, **caractérisé en ce que** l'avertissement par radiomessagerie du téléphone mobile (UE) du dispositif de transmission radio (Cₐₗₜ) tombé en panne peut être réalisé de trois manières différentes : (1) directement pour tous les terminaux mobiles (UE) dans un laps de temps continu ou (2) avec une répartition sur un laps de temps plus long ou (3) pour un téléphone mobile (UE) défini, seulement une fois qu'il y a pour le téléphone mobile (UE) concerné à nouveau des données à transmettre.

7. Procédé selon l'une des revendications 1 à 6, **caractérisé en ce que** dans le cas où le dispositif de transmission de données (A) et le dispositif de commande de mobilité (B) sont séparés physiquement, l'arrivée de nouvelles données pour le téléphone mobile (UE) est détectée par le dispositif de commande de mobilité grâce au fait que : (a) le dispositif de transmission de données (A) peut informer le dispositif de commande de mobilité (B) de l'arrivée de nouvelles données ou (b) le dispositif de commande de mobilité (B) prend en charge, jusqu'à ce que le téléphone mobile (UE) soit retrouvé, la liaison de données du dispositif de transmission radio (Cₐₗₜ) tombé en panne.

8. Procédé selon l'une des revendications 1 à 7, **caractérisé en ce qu'**après que le téléphone mobile (UE) du dispositif de transmission radio (Cₐₗₜ) tombé en panne a été averti par radiomessagerie, le téléphone mobile (UE) qui se trouvait à l'état de repos avant la panne est remis à l'état de repos.

9. Procédé selon l'une des revendications 1 à 8, **caractérisé en ce que** pendant le traitement de la panne du dispositif de transmission radio (Cₐₗₜ), les données destinées au téléphone mobile (UE) jusqu'à ce que celui-ci soit trouvé sont mises en mémoire tampon, de sorte que la perte de données due à la panne du dispositif de transmission radio est minimalisée.
